# EUROPÄISCHE PATENTSCHRIFT

(11) **EP 0 756 514 B1**
(45) Veröffentlichungstag und Bekanntmachung des Hinweises auf die Patenterteilung: **04.03.1998**
(21) Anmeldenummer: 95907576.3
(22) Anmeldetag: 21.01.1995
(51) Int. Cl.: B01D 53/22, B01D 65/00, B01D 53/26

(54) **MEMBRAN-TRENNVORRICHTUNG MIT KÜHLVORRICHTUNG**
DIAPHRAGM SEPARATOR WITH COOLING DEVICE
DISPOSITIF DE SEPARATION A MEMBRANES AVEC DISPOSITIF DE REFROIDISSEMENT

(30) Priorität: 18.04.1994 DE 4413362
(43) Veröffentlichungstag der Anmeldung: 05.02.1997
(73) Patentinhaber: HYDAC FILTERTECHNIK GmbH, D-66273 Sulzbach (DE)
(72) Erfinder: PETERSEN, Klaus-Jürgen, D-66111 Saarbrücken (DE); THEIS, Dieter, D-66399 Mandelbachtal 3 (DE); WNUK, Ralf, D-66450 Bexbach (DE)
(74) Vertreter: Patentanwälte Bartels und Partner
(86) Internationale Anmeldenummer: EP9500215
(87) Internationale Veröffentlichungsnummer: WO9528221

(56) Entgegenhaltungen:
- DE-A- 3 507 908
- FR-A- 2 604 638
- US-A- 4 613 436
- US-A- 5 294 345

## Beschreibung

Die Erfindung betrifft eine Vorrichtung mit lösemittel-selektiven Membranen, die im Abstand voneinander längs eines Zentralkanales gestapelt sind und die zur Abtrennung eines Permeates aus einem in die Vorrichtung zugeführten Feedstromes dienen, das über den Zentralkanal aus der Vorrichtung abführbar ist.

Eine dahingehende Vorrichtung ist beispielsweise durch die DE-C-35 07 908 bekannt. Dahingehende Vorrichtungen mit Trennmembranen werden für moderne Verfahren zur Abluftreinigung und Lösemittel-Rückgewinnung eingesetzt, häufig auch in Kombination mit anderen Verfahrenstechniken, wie Adsorption, Absorption oder thermischen Abluftreinigungsverfahren. Mit dieser sog. Gas-Dampf-Permeation werden die Lösemittel selektiv aus einem Gasstrom abgetrennt und angereichert.

Da die bisher industriell im Einsatz befindlichen porenfreien Membranen zur Anreicherung von Lösemittel eine aktive Trennschicht besitzen und diese nicht nur Lösemittel, sondern auch Wasser permeieren lassen - meist auf Silikonbasis -, gelingt es in der Regel nicht, ein wasserfreies Permeat zu erzielen.

Ausgehend von diesem Stand der Technik liegt der Erfindung die Aufgabe zugrunde, eine Vorrichtung zur selektiven Anreicherung von Wasser und organischen Lösemitteln aus Feedströmen (Gasströmen) bei gleichzeitiger Trennung von Wasser und Lösemittel zu schaffen. Eine dahingehende Aufgabe löst eine Vorrichtung mit den Merkmalen des Anspruches 1.

Dadurch, daß erfindungsgemäß innerhalb der Vorrichtung in Durchströmrichtung des Feedstromes den lösemittel-selektiven Membranen mindestens eine wasser-selektive Membran vorgeordnet ist und daß im Bereich der jeweiligen wasser-selektiven Membran und des Zentralkanales eine Kühlvorrichtung vorhanden ist, wird der Feed- oder Gasstrom zunächst über den jeweiligen wasser-selektiven Membranteil geleitet, in dem das Wasser entfernt wird. Der derart um das Wasser entreicherte Gasstrom wird dann anschließend über die lösemittel-selektiven Membranen von dem verbleibenden Lösemittel getrennt.

Es hat sich gezeigt, um eine entsprechende Wasserabtrennung wirtschaftlich betreiben zu können, daß hierfür hoch-selektive Membranen notwendig sind. Diese benötigen jedoch eine hohe treibende Konzentrationsdifferenz über der Membran, um entsprechend hohe Transportraten zu erzielen. Dies erfordert wiederum sehr niedrige Wasserdampfpartialdrücke im Permeat, um eine entsprechend gute Permeat-Abfuhr zu erreichen. Es wäre nun zwar möglich, für wasser-selektive Membranen ein eigenes Modulkonzept zu entwickeln, wie es für lösemittel-selektive Membranen in der DE-C-35 07 908 offenbart ist. Da die hierfür erforderlichen Membranflächen dann jedoch nur vergleichsweise gering sind, wäre ein dahingehender eigenständiger Modul für die wasser-selektiven Membranen immer noch nicht wirtschaftlich. Dadurch, daß permeatseitig im Bereich der wasser-selektiven Membranen eine Kühlung integriert ist, die den Wasserdampfpartialdruck in diesem Bereich sehr niedrig hält und an der permeierter Wasserdampf kondensiert, entsteht eine hohe Austragrate von Wasser, das von der jeweiligen wasser-selektiven Membran aus dem Feedstrom abgetrennt wurde.

Aufgrund ihrer hohen Selektivität sind die Strömungsverhältnisse im Permeatraum der wasser-selektiven Membranen im wesentlichen durch die Wasserdampfdiffusion bestimmt. Es stellt sich mithin nur eine sehr geringe konvektive Strömung ein. Damit bleibt aber auch die notwendige Kühlleistung auf den Eintrag der Verdampfungs- bzw. Kondensationswärme für das Kondensat beschränkt. Wegen der vergleichsweise hohen Gas-/Dampfdurchlässigkeit der nachgeschalteten lösemittel-selektiven Membranen ergibt sich im darüberliegenden Permeatraum der lösemittel-selektiven Membranen eine konvektive Strömung, die ein gleichzeitiges Kondensieren von Lösemitteldampf an der internen Kühlung verhindert. Auf diese Art und Weise ist eine saubere und vollständige Trennung zwischen Kondensat und Permeat erreicht.

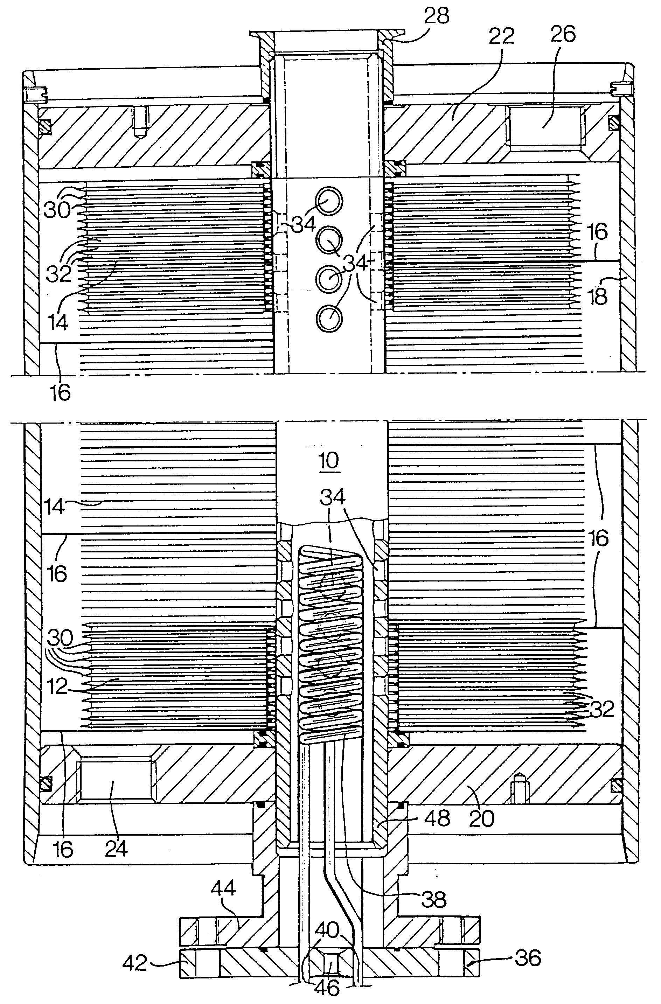

Im folgenden wird die erfindungsgemäße Vorrichtung anhand der Zeichnung nach der einzigen Figur näher erläutert.

Die in der Figur im Längsschnitt dargestellte Vorrichtung bildet eine Art Membran-Modul aus, das im wesentlichen aus einem Zentralkanal in Form eines Permeat-Sammelrohres 10, Membrantaschenstapeln 12 und 14 mit Umlenkscheiben 16 zur Strömungsführung und einem zylindrischen Modulgehäuse 18 besteht, das stirnseitig von Stirnplatten 20 und 22 abgeschlossen ist.

Der nähere Aufbau einer dahingehenden Vorrichtung mit Membranen ist beispielsweise in der DE-C-35 07 908 beschrieben, so daß auf den Aufbau nur noch insofern eingegangen wird, wie er zur Erläuterung der Erfindung notwendig ist. Die Darstellung in der Figur gibt in Blickrichtung gesehen den üblichen Einbauzustand der Vorrichtung wieder. Die untere Stirnplatte 20, die gegenüber dem unteren Rand des Modulgehäuses 18 nach innen zurückversetzt angeordnet ist, weist außermittig eine zentrale Zuführöffnung 24 auf, über die der Feedstrom in das Innere der Vorrichtung zuführbar ist.

Der Feedstrom ist in der Regel gasförmig und weist einen gewissen Wasseranteil auf, der sehr niedrig sein kann, beispielsweise Werte der Luftfeuchtigkeit annimmt, aber auch sehr hohe Werte annimmt, insbesondere, wenn der Feedstrom sehr heiß ist und mithin hohe Dampfsättigungswerte aufweist. Der Feedstrom kann unter sehr hohem Druck, unter normalem Umgebungsdruck aber auch mit Unterdruck in die Vorrichtung eingespeist werden, wobei letzteres erst dadurch ermöglicht wird, daß die noch näher zu erläuternde Kühlvorrichtung auf der Permeatseite der Vorrichtung den Wasserdampfpartialdruck sehr niedrig hält.

Der angesprochene Feedstrom, der der Vorrichtung zugeleitet wird, stammt beispielsweise aus der Desorption von Adsorbentien, aus Trocknungsprozessen, aus Verfahren der Bodensanierung, der Abluftreinigung und der Lösemittel-Rückgewinnung. Diese Aufzählung ist nur beispielhaft und läßt sich um eine Vielzahl weiterer möglicher Anwendungen ergänzen. Ziel der Vorrichtung ist es jedenfalls, die gasförmigen Bestandteile des Feedstromes als sog. Retentat abgereichert um das Permeat neben diesem eigentlichen Permeat und dem Kondensat in Form von Wasser getrennt voneinander zu gewinnen. Bei dem Permeat kann es sich um Lösemittel handeln, aber auch um sonstige, aus dem Feedstrom abzutrennende oder zu gewinnende Stoffe oder Stoffgemische, die mittels der lösemittel-selektiven Membranen aus dem Feedstrom abtrennbar und der Permeatseite zuleitbar sind.

Das um das Permeat abgereicherte Retentat, meist in Form von Luft und/oder Stickstoff, verläßt die Vorrichtung über die in der oberen Stirnseite 22 außermittig angebrachte Abluftöffnung 26. Koaxial zu der Längsachse der Vorrichtung angeordnet wird diese von dem Zentralkanal oder dem Permeat-Sammelrohr 10 durchgriffen, das zwecks Permeatabfuhr wiederum die obere Stirnplatte 22 durchgreift und mit einer Anschlußöffnung 28 versehen ist. Zwischen den Stirnplatten 20 und 22 und von dem Permeat-Sammelrohr 10 durchgriffen sind innerhalb der Vorrichtung und im Abstand voneinander die Membranen 30 gestapelt, die mittels eines sog. Spacergewebes 32 auf Abstand gehalten sind. Der einfacheren Darstellung wegen sind in der Figur nicht alle Membranen 30 mit Spacergewebe 32 gezeigt. Der dahingehende Aufbau, einschließlich das Zusammenfassen der Membranen 30 mit Spacergewebe 32 zu sog. Membran-Taschenstapeln 12 und 14, ist der Fachwelt bekannt.

Der in der Figur gesehen untere Membran-Taschenstapel 12 weist wasser-selektive Membranen auf, wohingegen die oberen Membran-Taschenstapel 14 beispielsweise in Form von PDMS-Membranen der Permeat-Selektion dienen und lösemittel-selektiv ausgebildet sind. Jeder Membran-Taschenstapel 12,14 ist von einer Umlenkscheibe 16 von dem nächsten Stapel getrennt, wobei jeder Membran-Taschenstapel 12,14 wiederum mittig in einer horizontalen Ebene gleichfalls von einer Umlenkscheibe 16 teilweise getrennt ist. Aufgrund der radial versetzt zueinander angeordneten Umlenkscheiben 16 ist der über die Zuführöffnung 24 zugeführte Feedstrom gezwungen, in einer Art linearen zick-zack-förmigen Bewegung die Vorrichtung mit ihren einzelnen Membran-Taschenstapeln 12,14 zu durchströmen.

Die Baugröße der Vorrichtung, insbesondere die Anzahl der zum Einsatz kommenden Membran-Taschenstapel 12,14 mit ihren wasser-selektiven bzw. lösemittel-selektiven Membranen 30 nebst Spacergewebe 32, hängt ab vom jeweiligen Anwendungsfall für die Vorrichtung. Die modular aufgebaute Vorrichtung läßt sich jedenfalls entsprechend anpassen und bildet für jeden Anwendungsfall Baueinheiten aus. Um die Zuführung des Permeats und des zu kondensierenden Wassers in das Permeat-Sammelrohr 10 zu erlauben, weist dieses umfangsseitig durchgehende Durchlaßöffnungen 34 auf, die in Längsrichtung gesehen zumindest teilweise zueinander axial versetzt angeordnet sind. Auch diese Anordnung ist bekannt, so daß an dieser Stelle hierauf nicht mehr näher eingegangen wird.

Die als Ganzes mit 36 bezeichnete Kühlvorrichtung weist im geometrischen Aufbau vergleichbar einem Tauchsieder eine Kühlwendel 38 auf, die in das Innere des Permeat-Sammelrohres 10 in den unteren Teil der Vorrichtung im Bereich des Membran-Taschenstapels 12 mit den wasser-selektiven Membranen 30 eingreift. Die Kühlwendel 38 verfügt über Anschlußleitungen 40, über die sie an eine Kältequelle (nicht dargestellt) anschließbar ist. So kann beispielsweise zur Abkühlung die Kühlwendel 38 über ihre Anschlußleitungen 40 mit flüssigem Stickstoff gekühlt werden. Die Kühlvorrichtung 36 weist eine Anschlußplatte 42 auf, mit der sie fest mit einem Anschlußflansch 44 verbindbar ist, der auf die untere Stirnplatte 20 aufgesetzt ist. Diese Anschlußplatte 42 weist mittig eine Kondensat-Abführöffnung 46 auf, die fluidführend mit dem Inneren des Permeat-Sammelrohres oder Zentralkanales 10 in Verbindung steht. Die Bauhöhe der Kühlwendel 38 ist derart gewählt, daß bei der Verbindung von Anschlußplatte 42 mit Anschlußflansch 44 das in der Figur gesehen obere Ende der Kühlwendel 38 mit einem vorgebbaren axialen Abstand unterhalb der horizontalen Begrenzung der oberen Umlenkscheibe 16 endet, die den unteren Membran-Taschenstapel 12 mit seinen wasser-selektiven Membranen 30 nach oben hin begrenzt.

Durch die in der Figur dargestellte senkrechte Anordnung läuft der mittels der Kühlvorrichtung 36 kondensierte Wasserdampf ohne weiteres ab und kann in einem Sammelbehälter (nicht dargestellt) aufgefangen werden. Damit ergibt sich im Permeatstrom, der mit sehr hoher konvektiver Strömung oberhalb des Endes der Kühlwendel 38 in Richtung der Anschlußöffnung 28 zwecks Austritt aus der Vorrichtung bewegt, ein sehr geringer Wassergehalt, der die Rückgewinnung von weitgehend wasser-freiem Permeat, beispielsweise in Form von Lösemittel, in einer nachgeschalteten Kondensations- oder Verdichterstufe (nicht dargestellt) ermöglicht. Unterstützt wird dieser Vorgang noch dadurch, daß im Bereich der Wasserabscheidung der Vorrichtung sich nur eine sehr geringe konvektive Strömung einstellt.

Die Kühlvorrichtung 36 nach der Figur stellt nur eine mögliche Ausführungsform dar. Ebenso wäre es möglich, mittels Kühlkanälen (nicht dargestellt), die in der Begrenzungswand 48 des Zentralkanales oder des Permeat-Sammelrohres 10 verlaufen, im Bereich des unteren Membran-Taschenstapels 12 eine Kühlung herbeizuführen. Gegebenenfalls läßt sich auch die notwendige Kühlung durch ein unmittelbar in den unteren Teil des Permeat-Sammelrohres 10 einbringbares Kältegas erreichen.

## Patentansprüche

1. Vorrichtung mit lösemittel-selektiven Membranen (30), die im Abstand voneinander längs eines Zentralkanales (10) gestapelt sind und die zur Abtrennung eines Permeates aus einem in die Vorrichtung zugeführten Feedstrom dienen, das über den Zentralkanal (10) aus der Vorrichtung abführbar ist, dadurch gekennzeichnet, daß innerhalb der Vorrichtung in Durchströmrichtung des Feedstromes den lösemittel-selektiven Membranen (30) mindestens eine wasser-selektive Membran (30) vorgeordnet ist und daß im Bereich der jeweiligen wasser-selektiven Membran (30) und des Zentralkanales (10) eine Kühlvorrichtung (36) vorhanden ist.

2. Vorrichtung nach Anspruch 1, dadurch gekennzeichnet, daß die Kühlvorrichtung (36) eine derart vorgebbare Kühlleistung aufweist, daß zumindest bis zur Übergangsstelle von wasser-selektiven zu lösemittel-selektiven Membranen (30) eine Kühlung im Zentralkanal (10) erfolgt.

3. Vorrichtung nach Anspruch 1 oder 2, dadurch gekennzeichnet, daß die Kühlvorrichtung (36) aus einer Kühlwendel (38) gebildet ist, die in das Innere des Zentralkanales (10) ragt und/oder mindestens einen Kühlkanal aufweist, der in einer Begrenzungswand (48) verläuft, die den Zentralkanal (10) umgibt.

## Claims

1. Device with solvent-selective membranes (30), which are stacked at a distance apart along a central channel (10) and which serve for the separation of a permeate from a feed stream supplied to the device, which can be discharged from the device by way of the central channel (10), characterized in that within the device in the through-flow direction of the feed stream, at least one water-selective membrane (30) precedes the solvent-selective membranes (30) and that a cooling device (36) is present in the region of the respective water-selective membrane (30) and the central channel (10).

2. Device according to Claim 1, characterized in that the cooling device (36) has a cooling capacity which can be preset so that cooling occurs in the central channel (10) at least as far as the transition point from water-selective to solvent-selective membranes (30).

3. Device according to Claim 1 or 2, characterized in that the cooling device (36) is formed from a cooling coil (38), which projects into the inside of the central channel (10) and/or comprises at least one cooling channel, which extends in a boundary wall (48) which surrounds the central channel (10).

## Revendications

1. dispositif comprenant des membranes permsélectives (30) perméables aux solvants, qui sont empilées à une distance déterminée les unes des autres le long d'un canal central (10) et qui sont destinées à extraire un perméat d'un courant d'alimentation, qui est introduit dans le dispositif et qui peut être évacué du dispositif par l'intermédiaire du canal central (10), caractérisé en ce que, à l'intérieur du dispositif, dans le sens d'écoulement du courant d'alimentation, au moins une membrane permsélective (30) perméable à l'eau est montée en amont des membranes permsélectives (30) perméables aux solvants, et en ce qu'il est prévu de monter un dispositif de refroidissement (36) dans la zone de chaque membrane permsélective (30) perméable à l'eau et dans la zone du canal central (10).

2. Dispositif selon la revendication 1, caractérisé en ce que le dispositif de refroidissement (30) présente une capacité de refroidissement donnée, de telle sorte que le refroidissement est exécuté dans le canal central (10) au moins jusque dans la zone de transition entre les membranes permsélectives (30) perméables à l'eau et les membranes permsélectives (30) perméables aux solvants.

3. Dispositif selon la revendication 1 ou 2, caractérisé en ce que le dispositif de refroidissement (36) est formé par une spirale de refroidissement (38), qui s'engage à l'intérieur du canal central (10) et/ou présente au moins un canal de refroidissement, qui est posé dans une paroi périphérique (48), qui entoure le canal central (10).
